# EUROPÄISCHE PATENTANMELDUNG

(11) **EP 4 227 436 A1**
(43) Veröffentlichungstag der Anmeldung: **16.08.2023**
(21) Anmeldenummer: 22020048.9
(22) Anmeldetag: 11.02.2022
(51) Int. Cl.: C25B 1/02, C25B 9/23, C25B 15/08, C01B 3/24, C09C 1/48, C01B 32/00, B01D 53/32

(54) **VERFAHREN UND ANLAGE ZUR GEWINNUNG VON WASSERSTOFF AUS METHAN**

(71) Anmelder: Linde GmbH, 82049 Pullach (DE)
(72) Erfinder: Müller, Wolfgang, 82049 Pullach (DE); Korn, Wibke, 82049 Pullach (DE); Peschel, Andreas, 82049 Pullach (DE)
(74) Vertreter: Fischer, Werner

(57) **Zusammenfassung**

Die Erfindung betrifft ein Verfahren zur Gewinnung von Wasserstoff aus einem Gas oder Gasgemisch, das zumindest Methan aufweist, bei dem zumindest das Methan (a) mittels Pyrolyse (110) in Kohlenstoff (c) und Wasserstoff zerlegt wird, wobei bei der Pyrolyse entstehendes Gas oder Gasgemisch als Rohgas (b, d) einer elektrochemischen Trennung und Kompression (130) zugeführt wird, bei der in dem Rohgas enthaltener Wasserstoff (e) von übrigen Komponenten (g) getrennt und komprimiert wird. Die Erfindung betrifft auch eine entsprechende Anlage (100).

## Beschreibung

Die Erfindung betrifft ein Verfahren sowie eine Anlage zur Gewinnung von Wasserstoff aus einem Gas oder Gasgemisch, das zumindest Methan aufweist, wobei zumindest das Methan mittels Pyrolyse in Kohlenstoff und Wasserstoff zerlegt wird.

### Stand der Technik

Zum Erzeugen oder Gewinnen von Wasserstoff kann Wasser z.B. im Rahmen von Elektrolyse gespalten werden. Ebenso kann Wasserstoff aber auch aus Kohlenwasserstoffen wie z.B. Methan gewonnen werden, z.B. durch Dampfreformierung von Erdgas. Weiterhin kann Wasserstoff durch sog. Pyrolyse aus Methan gewonnen werden, wie z.B. in "Stefan Schneider, Siegfried Bajohr, Frank Graf, Thomas Kolb: Verfahrensübersicht zur Erzeugung von Wasserstoff durch Erdgas-Pyrolyse, Chem. Ing. Tech. 2020, 92, No. 8, 1023-1032" ausführlich beschrieben. Einen allgemeinen Überblick über katalytische Prozesse bietet z.B.: "Amin, A. M.; Croiset, E.; Epling, W.: Review of methane catalytic cracking for hydrogen production. International Journal of Hydrogen Energy 36.4 (2011)." Plasma-Verfahren (Plasmagas) sind z.B. beschrieben in: "Fulcheri, L.; Probst, N.; Flamant, G.; Fabry, F.; Grivei, E.; Bourrat, X.: Plasma processing: a step towards the production of new grades of carbon black. Carbon 40.2 (2002)."

Wie sich gezeigt hat, entstehen bei der Pyrolyse neben Wasserstoff auch Nebenprodukte, die abgetrennt werden müssen, um reinen Wasserstoff zu erhalten. Um den Wasserstoff komprimiert zu erhalten, kann die Pyrolyse bei hohem Druck erfolgen, was allerdings gewisse Problematiken beim Betrieb der Anlage sowie der Abtrennung der Nebenprodukte mit sich bringt. Wird die Pyrolyse bei niedrigeren Drücken durchgeführt, ergeben sich hohen Kosten für die nachfolgende Kompression des Wasserstoffs; die Nebenprodukte müssen trotzdem noch abgetrennt werden.

Die vorliegende Erfindung stellt sich daher die Aufgabe, verbesserte Möglichkeiten zur Gewinnung von Wasserstoff aus Methan mittels Pyrolyse anzugeben.

### Offenbarung der Erfindung

Diese Aufgabe wird durch ein Verfahren sowie eine Anlage zur Gewinnung von Wasserstoff aus einem Gas oder Gasgemisch, das zumindest Methan aufweist mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die Erfindung beschäftigt sich mit dem Erzeugen oder Gewinnen von Wasserstoff aus einem Gas oder Gasgemisch, das zumindest Methan aufweist, wobei das Methan mittels Pyrolyse in Kohlenstoff und Wasserstoff zerlegt wird. Das Methan kann dabei in Form von Erdgas oder anderweitig bereitgestellt werden; grundsätzlich kann das Methan in einem Gas bzw. Gasgemisch zusammen mit weiteren, z.B. in Form von Verunreinigungen vorliegenden Komponenten enthalten sein. Bei der Pyrolyse von Methan wird das gasförmige Methan (CH₄) in festen Kohlenstoff (C) sowie gasförmigen Wasserstoff (H₂) zerlegt:

CH4 (g) → C (s) + 2·H₂ (g).

Dabei handelt es sich um eine endotherme Reaktion. Andere Komponenten im Gas bzw. Gasgemisch, insbesondere Kohlenwasserstoffe, würden hierbei in der Regel ebenfalls zerlegt werden. Für eine ausführlichere Erläuterung der Pyrolyse und mögliche Formen davon sei auf "Stefan Schneider, Siegfried Bajohr, Frank Graf, Thomas Kolb: Verfahrensübersicht zur Erzeugung von Wasserstoff durch Erdgas-Pyrolyse, Chem. Ing. Tech. 2020, 92, No. 8, 1023-1032" verwiesen.

Im Hinblick auf geringe Kohlenstoffdioxidemissionen und aus energetischer Sicht ist die Pyrolyse eine vielversprechende Technologie zur Gewinnung von Wasserstoff, da der feste Kohlenstoff deutlich einfacher gespeichert werden kann, als bei anderen Reaktionen entstehendes, gasförmiges Kohlenstoffdioxid. Während bei thermischer Pyrolyse mit Feuerung Rauchgas entsteht, kann bei einer Pyrolyse, die mit elektrischer Energie durchgeführt wird, auch solches Rauchgas vermieden werden. Im Vergleich zur Elektrolyse von Wasser ist der Energieverbrauch pro Mol an gewonnenem Wasserstoff bei der Pyrolyse außerdem deutlich geringer. Während bei der Pyrolyse zumindest theoretisch nur 5,1 kWh pro kg Wasserstoff benötigt werden, sind es bei der Elektrolyse theoretisch wenigstens 33 kWh (basierend auf LHV, "Low Heating Value"), in der Praxis aber meist mehr als 50 kWh.

Wie schon erwähnt, entstehen bei der Pyrolyse selbst von reinem Methan in der Regel nicht nur (reiner) Wasserstoff und (fester) Kohlenstoff, sondern es fallen auch Nebenprodukte an, typischerweise Kohlenwasserstoffe wie z.B. C₂H₂, C₂H₆ oder Benzene. Auch Methan selbst kann im abgeführten Gasstrom noch enthalten sein. Um möglichst reinen Wasserstoff zu erhalten, gilt es also, diese Nebenprodukte aus dem bei der Pyrolyse entstehenden Gas bzw. Gasgemisch (Rohgas) möglichst gut zu entfernen. Der Kohlenstoff muss ebenfalls entfernt werden, ist aber nicht im entstehenden Gas bzw. Gasgemisch enthalten, da der Kohlenstoff als Feststoff anfällt.

Typische Verunreinigungen im Erdgas wie Stickstoff, Argon und andere Inertkomponenten sind in der Regel neben Methan noch in dem in der Pyrolyse eingesetzten Gas - wenn auch nur in geringen Anteilen - enthalten. Kohlenstoffdioxid und Schwefelkomponenten werden vorzugsweise vor der Pyrolyse abgetrennt.

Wenn die Pyrolyse bei hohen Drücken von z.B. zwischen 10 und 50 bar, vorzugswiese zwischen 10 und 30 bar, erfolgt, stellt die effiziente und gleichzeitig möglichst vollständige Entfernung der Nebenprodukte aus dem Rohgas eine erhebliche Herausforderungen dar. Weiterhin ist davon auszugehen, dass die Menge an Nebenprodukten mit dem Pyrolysedruck zunimmt. Bei konstanter Temperatur verschiebt sich das Reaktionsgleichgewicht der Pyrolyse mit steigendem Druck hin zu den Edukten, wodurch der Methanumsatz sinkt. Um auch bei hohen Drücken einen ausreichenden Umsatz zu erhalten, ist es daher erforderlich, die Pyrolyse bei Temperaturen durchzuführen, die u.U. technisch nicht oder nur sehr schwer zu beherrschen sind. Beispielsweise wird bei einem Pyrolysedruck von 5 bar ein Methanumsatz von 95% bei ca. 1150°C erreicht, während bei einem Druck von 20 bar bereits eine Temperatur von ca. 1350°C erforderlich ist. Unter diesen Bedingungen kann es schwierig sein, die für die Pyrolyse benötigte Energie in den Prozess einzubringen.

Wird die Pyrolyse hingegen bei niedrigen Drücken von z.B. weniger als 10 bar, vorzugswiese weniger als 5 bar oder insbesondere weniger als 3 bar durchgeführt, ist es zwar einfacher, die Nebenprodukte zu erdfernen, auch das Einbringen der Energie ist einfacher. Allerdings wird dann auch der Wasserstoff bei geringem Druck, d.h. wenig bis kaum komprimiert, erhalten. Insbesondere zum Speichern des Wasserstoffs ist aber eine Kompression wünschenswert. Dies erfordert bisher hohen Aufwand bzw. hohe Kosten.

Vor diesem Hintergrund wird vorgeschlagen, das bei der Pyrolyse entstehende Gas oder Gasgemisch, das also neben Wasserstoff in der Regel auch noch Nebenprodukte enthält, als Rohgas einer elektrochemischen oder elektrokatalytischen (beide Begriffe bedeuten hier dasselbe, wenngleich meist von "elektrochemisch" gesprochen wird) Trennung und Kompression zuzuführen. Diese kann auch mehrstufig erfolgen. Dort wird der im Rohgas enthaltene Wasserstoff von den übrigen Komponenten zumindest weitestgehend getrennt und zudem auch komprimiert. Eine solche elektrochemische Trennung erfolgt insbesondere durch die Verwendung einer Membran, und zwar vorzugsweise eine sog. Protonen-Austausch-Membran (PEM, "Proton Exchange Membrane"). Diese Membran ist dann nur für Protonen durchlässig, nicht allerdings für Gase wie die erwähnten Nebenprodukte im Rohgas. Ebenso kommen z.B. eine (insbesondere saure) Festkörpermembran oder eine Polymermembran in Betracht.

Dabei wird der im Rohgas enthaltene Wasserstoff an einer als Anode ausgeführten Seite der Membran in Wasserstoff-Ionen - also Protonen - und Elektronen zerlegt. Während die Protonen die Membran passieren können, werden die Elektronen über elektrische Leiter abgeführt; die Membran selbst ist typischerweise ein elektrischer Isolator. Auf der anderen, als Kathode ausgeführten Seite der Membran rekombinieren die Protonen und Elektronen wieder zu Wasserstoff.

Da die Drücke auf der Anoden- und der Kathodenseite der Membran unabhängig voneinander eingestellt werden können, ist es möglich, Wasserstoff aus dem Rohgas abzutrennen und gleichzeitig zu komprimieren, sodass komprimierter Wasserstoff als Produkt von der Membran abgeführt und z.B. gespeichert werden kann. Beachtet werden sollte dabei, dass ein Teil des Wasserstoffs in der Regel wieder zurückdiffundiert und nie Vollumsatz erhalten wird (daher Recycle um die Anode). Auf diese Weise entsteht auf der Anodenseite der Membran ein wasserstoffhaltiges Restgas, das auch andere brennbare Komponenten wie z.B. Methan umfassen kann. Es ist daher möglich, dieses Restgas zur Verbrennung und Wärmeintegration in der Anlage, als Recycle zur Pyrolyse, als Exportgas oder zur Erzeugung von elektrischer Energie z.B. in einer Hochtemperaturbrennstoffzelle zu nutzen.

Durch die über die Membran erreichbare Kompression des Wasserstoffs kann die Pyrolyse bei geringeren Drücken von z.B. weniger als 10 bar, weniger als 5 bar oder sogar weniger als 3 bar durchgeführt werden, und zwar mit den schon genannten Vorteilen. Soweit hier oder an anderer Stelle Drücke mit der Einheit bar erwähnt werden, sind diese nicht als Absolut-, sondern als Überdrücke zu verstehen.

Je nach der Dicke der Membran kann es vorkommen, dass gewisse Komponenten aus dem Rohgas, neben dem Wasserstoff bzw. den Protonen, aufgrund von Diffusion trotzdem auch auf die Kathodenseite der Membran gelangen. Dieser Effekt kann verhindert oder zumindest vermindert werden, indem z.B. eine dickere Membran verwendet wird. Je nach Technologie kann diese Dicke geeignet gewählt werden. Während bei Festkörpermembranen in der Regel ohnehin keine Diffusion auftritt (und die Dicke daher weniger relevant ist), kommen bei Polymermembran z.B. Membrandicken von ca. 200 µm in Betracht. Bei allen Technologien können ggf. auch mehrstufige Kompressionen verwendet werden (dann mit mehreren Membranen in Reihe). Alternativ oder zusätzlich kann auch eine (zusätzliche) Reinigung des - dann nicht ganz reinen - Wasserstoffs nach der Trennung, d.h. auf der Kathodenseite der Membran, erfolgen.

Bevor das Rohgas der elektrochemischen Trennung und Kompression zugeführt wird, wird es vorzugsweise noch vorbehandelt. Hierbei kommen eine oder mehrere Behandlungen in Betracht. So können z.B. Staub, Kohlenstoff und/oder Verunreinigungen aus dem Rohgas entfernt werden, um die Membran vor Verschmutzung zu schützen. Auch kann das Rohgas abgekühlt werden, um die elektrochemische Trennung zu vereinfachen. Ebenso kommt eine Hydrierung in Betracht, und zwar insbesondere eine Hydrierung von ungesättigten Nebenprodukte, die neben Wasserstoff im Rohgas enthalten sein können. Hierbei können Hydrierkatalysatoren zum Einsatz kommen, z.B. Edelmetalle bei 70-200°C (je nachdem, welche Komponenten hydriert werden soll). Dies schützt die Membran vor kritischen Verunreinigungen. Außerdem kommt eine Befeuchtung (oder Anfeuchtung, Humidifikation) des Rohgases in Betracht. Dies ist insbesondere deshalb zweckmäßig, weil die Membran selbst ebenfalls befeuchtet wird, um einen effizierenden Betrieb zu gewährleisten.

Insbesondere dann, wenn die Membran befeuchtet wird, ist es zweckmäßig, den aus dem Rohgas abgetrennten Wasserstoff in einem Nachbehandlungsschritt zu entfeuchten oder anderweitig zu trocknen. Daneben kommen auch weitere Nachbehandlungsschritte in Betracht. So kann z.B. eine Reinigung, insbesondere Fein-Reinigung, erfolgen, um ggf. immer noch enthaltene Verunreinigungen, die z.B. die Membran passiert haben, zu entfernen. Diese Verunreinigungen können z.B. Methan und/oder Acetylen sein. Diese Reinigung kann z.B. durch sog. Druckwechsel-Adsorption (PSA, "Pressure Swing Adsorption"), oder Temperaturwechsel-Adsorption (TSA) erfolgen oder auch durch Methanisierung.

Ebenso wie das Restgas, können die bei der stromabwärts der Membran durchgeführten Reinigung des Wasserstoffs abgetrennten Verunreinigungen und/oder Reaktionsprodukte dieser Verunreinigungen zumindest teilweise wieder der Pyrolyse zugeführt werden. Dabei kann es sich z.B. um Methan handeln, das als Reaktionsprodukt bei der erwähnten Methanisierung entsteht. Gegebenenfalls kann eine Trocknung des Methans oder anderer Komponenten oder Verunreinigungen erforderlich sein, insbesondere dann, wenn eine der erwähnten Befeuchtungen vorgenommen wird.

Andere Komponenten oder Verunreinigungen, die nicht wieder der Pyrolyse zugeführt werden können oder sollen, können auch aus dem Prozess entfernt werden; dies betrifft z.B. Argon oder Stickstoff.

Besonders bevorzugt ist es, wenn die Pyrolyse mittels Plasmabrenner erfolgt. In diesem Fall ist es auch zweckmäßig, dem Plasmabrenner Wasserstoff zu dessen Betrieb zuzuführen, wobei der Wasserstoff insbesondere aus dem nach der Trennung und ggf. Kompression gewonnenen Wasserstoff abgezweigt wird. Die Verwendung eines oder ggf. mehrerer Plasmabrenner führt zu geringer Erosion der Elektroden, wenngleich der benötigte Wasserstoff einen gewissen Nachteil hinsichtlich der Kosteneffizienz des gesamten Verfahrens bringt.

Die Erfindung betrifft außerdem eine Anlage, die zur Durchführung eines erfindungsgemäßen Verfahrens eingerichtet ist. Dazu weist die Anlage insbesondere eine Pyrolysevorrichtung, z.B. mit Plasmabrenner, sowie eine Trenn- und Kompressionsvorrichtung, z.B. mit einer Protonen-Austausch-Membran, auf. Für weitere Details, mögliche Ausgestaltungen sowie Vorteile der Anlage sei auf die vorstehenden Ausführungen verwiesen, die hier entsprechend gelten.

Die Erfindung wird nachfolgend unter Bezugnahme auf die beigefügte Zeichnung näher erläutert, welche eine Anlage gemäß einer bevorzugten Ausführungsform der vorliegenden Erfindung zeigt.

### Kurze Beschreibung der Zeichnung

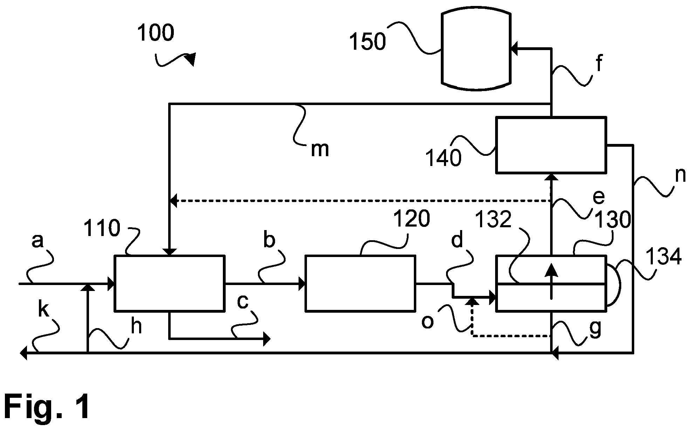

- Figur 1: zeigt schematisch eine Anlage zur Durchführung eines erfindungsgemäßen Verfahrens in einer bevorzugten Ausführungsform.

### Ausführliche Beschreibung der Zeichnung

In Figur 1 ist schematisch eine Anlage 100 dargestellt, mit der ein erfindungsgemäßes Verfahren durchführbar ist; insbesondere soll anhand der Figur 1 ein erfindungsgemäßes Verfahren in einer bevorzugten Ausführungsform näher erläutert werden.

Die Anlage 100 dient grundsätzlich der Gewinnung von Wasserstoff aus (zumindest) Methan mittels Pyrolyse. Hierzu wird Methan der Pyrolyse bzw. einer Pyrolysevorrichtung 110 mit z.B. einem Plasmabrenner zugeführt. Die Pyrolyse kann auch anders durchgeführt werden, dann zur Wärmezufuhr z.B. Befeuerung eines Reaktors oder eine andere Art der Wärmebereitstellung. Bei dem umzusetzenden Methan a kann es sich z.B. um Erdgas handeln. Hierzu sei erwähnt, dass das Methan hierbei nicht notwendigerweise in reiner Form vorliegen muss und in der Praxis meist auch nicht vorliegen wird. Insofern kann, sofern hier von Methan die Rede ist, auch ein Gasgemisch verstanden werden, das zwar als Hauptbestandteil Methan aufweist, allerdings ggf. auch verschiedene Verunreinigungen. Mit anderen Worten kann das Methan ggf. auch Teil eines Gases oder Gasgemisches mit weiteren Komponenten sein.

Bei der Pyrolyse 110 wird das Methan a zumindest im Wesentlichen in Wasserstoff und Kohlenstoff umgesetzt; dabei gilt die eingangs genannte Formel. Der Kohlenstoff, hier mit c bezeichnet, fällt als Feststoff an und kann auf geeignete Weise abgeführt werden. Neben Wasserstoff entstehen typischerweise auch noch weitere gasförmige Nebenprodukte, sodass ein Gasgemisch oder Rohgas b entsteht.

Dieses Rohgas b kann dann zunächst z.B. im Rahmen einer Vorbehandlung 120 unterzogen werden. Dabei können verschiedene Behandlungen wie z.B. die Entfernung von Staub und/oder Verunreinigungen, eine Abkühlung, eine Hydrierung sowie eine Befeuchtung vorgenommen werden. Das vorbehandelte Rohgas d wird dann einer elektrochemischen Trennung und Kompression bzw. einer Trennungs- und Kompressionsvorrichtung 130 zugeführt.

Dort ist insbesondere eine als Protonen-Austausch-Membran ausgebildete und vorzugsweise befeuchtete Membran 132 vorgesehen, an der der Wasserstoff in dem (vorbehandelten) Rohgas in Protonen und Elektrononen dekomponiert wird. Die Protonen wandern von der einen Seite durch die Membran 132 auf die andere Seite, wie durch einen Pfeil angedeutet, die Elektronen können z.B. über elektrische Leitungen 134 auf die andere Seite geführt bzw. geleitet werden. Dort rekombinieren die Protonen dann mit den Elektronen und bilden damit (wieder) Wasserstoff. Dieser Wasserstoff e ist damit zugleich komprimiert.

Bei Bedarf kann der Wasserstoff e noch einer Nachbehandlung 140 unterzogen werden. Beispielsweise kann der Wasserstoff getrocknet und ggf. von weiteren Verunreinigungen befreit werden. Dabei kann z.B. im Rahmen einer Methanisierung von Verunreinigungen, ebenfalls wieder Methan entstehen, hier mit n bezeichnet, das dann abgeführt wird. Der nachbehandelte Wasserstoff f kann dann abgeführt und z.B. in einer Speichereinheit 150 gespeichert oder anderweitig verwendet werden, z.B. direkt an eine Verbrauchsstelle geleitet werden.

Von dem nachbehandelten Wasserstoff f kann auch ein Teil, hier mit m bezeichnet, abgezweigt und der Pyrolysevorrichtung 110 zugeführt werden, um dort den Plasmabrenner zu betreiben. Denkbar ist auch, dass der Wasserstoff für den Plasmabrenner schon vor der Nachbehandlung, also vom Strom e, abgezweigt wird, wie durch eine nicht näher bezeichnete, gestrichelte Linie angedeutet, oder aber auch anderweitig erhalten wird.

Da, wie erwähnt, nur der Wasserstoff - in Form von Protonen - die Membran passieren kann (jedenfalls im Wesentlichen), verbleiben die übrigen Komponenten oder Nebenprodukte, die außer dem Wasserstoff noch im (vorbehandelten) Rohgas d enthalten sind, auf der einen Seite Membran 132, von welcher das Rohgas d zugeführt wird. Die auf diese Weise vom Wasserstoff abgetrennten Nebenprodukte g werden abgeführt. Soweit Nebenprodukte oder Komponenten des Rohgases d, außer dem Wasserstoff, die Membran 132 passieren, z.B. durch Diffusion, können diese im Rahmen der schon erwähnten Nachbehandlung 140 entfernt werden.

Von den abgetrennten Nebenprodukten und/oder bei der Nachbehandlung 140 anfallenden Verunreinigungen oder Reaktionsprodukte hiervon wie z.B. das Methan n, können dann, zumindest zum Teil, wieder dem Einsatzstrom an Methan a, also der Pyrolyse 110 zugeführt werden. Mit Strom k ist hier eine generelle Ausschleusung dargestellt, um Inertkomponenten abzuführen (sog. Purge Strom).

Wie schon erwähnt, kann es vorkommen, dass nicht der gesamte Wasserstoff vom Strom d abgetrennt wird und/oder, dass Wasserstoff durch die Membran 132 wieder auf die Seite, von der der Strom d zugeführt wird, zurückdiffundiert. Damit kann im Strom g weiterhin Wasserstoff vorhanden sein. Vorzugsweise wird der Strom g daher zur Erhöhung der Wasserstoff-Abtrennung zunächst auch zum Eintritt des elektrochemischen Kompressors, d.h. der Trennungs- und Kompressionsvorrichtung 130, rezykliert, also wieder dem Strom d zugeführt werden, wie mit Strom o (gestrichelt) angedeutet.

Der Kompressor bzw. die Trennungs- und Kompressionsvorrichtung 130 kann auch mehrstufig ausgebildet sein, d.h. die Trennung und Kompression können mehrstufig erfolgen. Zur weiteren Abreicherung der durch die Membran 132 diffundierenden Verunreinigungen kann nach der ersten Kompressionsstufe auch ein Teil des Wasserstoffs wieder zum Eintritt des elektrochemischen Kompressors (Trennungs- und Kompressionsvorrichtung 130) rezykliert werden.

## Patentansprüche

1. Verfahren zur Gewinnung von Wasserstoff aus einem Gas oder Gasgemisch, das zumindest Methan aufweist, wobei zumindest das Methan (a) mittels Pyrolyse (110) in Kohlenstoff (c) und Wasserstoff zerlegt wird, wobei bei der Pyrolyse entstehendes Gas oder Gasgemisch als Rohgas (b, d), **dadurch gekennzeichnet, dass** das Rohgas (b, d) einer elektrochemischen Trennung und Kompression (130) zugeführt wird, bei der in dem Rohgas (b, d) enthaltener Wasserstoff (e) von übrigen Komponenten (g) getrennt und komprimiert wird.

2. Verfahren nach Anspruch 1, wobei bei der elektrochemischen Trennung eine Membran (132), insbesondere eine Protonen-Austausch-Membran, eine Festkörpermembran oder eine Polymermembran, verwendet wird, und wobei das Rohgas (d) der als Anode ausgeführten Seite der Membran zugeführt und Wasserstoff (e) von de als Kathode ausgeführten Seite der Membran (132) abgeführt wird.

3. Verfahren nach Anspruch 2, wobei als Membran (132) die Protonen-Austausch-Membran verwendet wird, und wobei bei einer Dekomposition des Wasserstoffs auf der einen Seite der Membran entstehende Elektronen über elektrische Leiter (134) auf die andere Seite der Membran (132) geführt werden.

4. Verfahren nach Anspruch 2 oder 3, wobei die Membran (132) befeuchtet wird.

5. Verfahren nach einem der vorstehenden Ansprüche, wobei bei der elektrochemischen Trennung und Kompression nicht von den übrigen Komponenten getrennter Wasserstoff und/oder zurückdiffundierter Wasserstoff (d) erneut der elektrochemischen Trennung und Kompression (130) zugeführt wird.

6. Verfahren nach einem der vorstehenden Ansprüche, wobei ein Restgas zumindest eines der folgenden umfasst: Wasserstoff, der bei der elektrochemischen Trennung und Kompression nicht von den übrigen Komponenten abgetrennt worden ist, und/oder Wasserstoff, der zurückdiffundiert ist, und/oder weitere brennbare Komponenten, und wobei das Restgas für oder als wenigstens eines der folgenden verwendet wird: Verbrennung und/oder Wärmeintegration in einer verwendeten Anlage, Recycling zur Pyrolyse, Exportgas, Erzeugung von elektrischer Energie.

7. Verfahren nach einem der vorstehenden Ansprüche, wobei die elektrochemische Trennung und Kompression (130) mehrstufig erfolgt.

8. Verfahren nach einem der vorstehenden Ansprüche, wobei das Rohgas (b), bevor es der elektrochemischen Trennung und Kompression (130) zugeführt wird, vorbehandelt wird, umfassend zumindest eine der folgenden Behandlungen: Entfernung von Staub, Kohlenstoff und/oder Verunreinigungen, Abkühlung, Hydrierung, Befeuchtung.

9. Verfahren nach einem der vorstehenden Ansprüche, wobei der durch die elektrochemische Trennung entstehende Wasserstoff (e) nachbehandelt wird, umfassend zumindest eine der folgenden Behandlungen: Trocknung, Reinigung

10. Verfahren nach einem der vorstehenden Ansprüche, wobei zumindest eines der folgenden zumindest teilweise wieder der Pyrolyse (110) zugeführt wird: Komponenten, die vom Rohgas (d) bei der elektrochemischen Trennung abgetrennt wurden, und/oder Verunreinigungen, die vom Wasserstoff (e) nach der elektrochemischen Trennung abgetrennt wurden, und/oder Reaktionsprodukte (n) dieser Verunreinigungen.

11. Verfahren nach einem der vorstehenden Ansprüche, wobei vor der Pyrolyse (110) Kohlenstoffdioxid, Wasser und/oder Schwefelkomponenten vom Gas oder Gasgemisch abgetrennt werden.

12. Verfahren nach einem der vorstehenden Ansprüche, wobei die Pyrolyse (110) bei einem Druck von weniger als 10 bar, bevorzugt weniger als 5 bar, weiter bevorzugt weniger als 3 bar, durchgeführt wird.

13. Verfahren nach einem der vorstehenden Ansprüche, wobei die Pyrolyse (110) mittels Plasmabrenner erfolgt, wobei insbesondere ein Teil (m) des bei der elektrochemischen Trennung erhaltenen Wasserstoffs (e, f, n, g) zum Betrieb des Plasmabrenners verwendet wird.

14. Anlage (100), die dazu eingerichtet ist, ein Verfahren nach einem der vorstehenden Ansprüche durchzuführen.
